# EUROPEAN PATENT APPLICATION

(11) **EP 3 754 935 A1**
(43) Date of publication of application: **23.12.2020**
(21) Application number: 20178018.6
(22) Date of filing: 03.06.2020
(51) Int. Cl.: H04L 29/06, H04W 4/44

(54) **KEY UPDATE DEVICE AND STORAGE MEDIUM STORING KEY UPDATE PROGRAM**

(30) Priority: 20.06.2019 JP 2019114683
(71) Applicant: FUJITSU LIMITED, Kanagawa 211-8588 (JP)
(72) Inventor: Kotani, Seigo, Kanagawa, 211-8588 (JP)
(74) Representative: Hoffmann Eitle

(57) **Abstract**

A key update device updates key information on the in-vehicle device. The key update device acquires a remaining battery level of a battery that supplies power to an in-vehicle device; determines whether or not to newly issue key information on the in-vehicle device based on the acquired remaining battery level, requests, when it is determined that key information is to be newly issued, an external device for a certificate for newly issued key information through communication with the external device; and switches key information on the in-vehicle device to key information certified by the external device.

## Description

### FIELD

The embodiments disclosed herein are related to a key update device and a storage medium storing a key update program.

### BACKGROUND

Existing in-vehicle devices such as electronic control units (ECUs) installed in vehicles use key authentication employing public-key infrastructure (PKI) to update firmware and the like, in order to reduce the risk of unauthorized rewriting of firmware and the like. The PKI public key used to update the firmware and the like has an expiration date, and is thus accordingly updated. As an existing technique for updating such key information, there has heretofore been known an update management method for updating a shared key or the like in an ECU. Related techniques are disclosed in, for example, International Publication Pamphlet No. WO 2016/75865 and Japanese Laid-open Patent Publication No. 2011-211537.

The existing technology described above does not take into consideration the remaining level of the battery that supplies power to the in-vehicle device when updating the key information. For this reason, there is a problem that the key information update processing may be performed at an inappropriate timing such as when there is not enough battery power left to update the key information.

In one aspect, it is an object of the embodiments to provide an update device and a key update program capable of updating key information at an appropriate timing. According to an embodiment of the disclosure, key information may be updated at an appropriate timing.

### SUMMARY

According to an aspect of the embodiments, a key update device includes: a memory, and a processor coupled to the memory and configured to: acquire a remaining battery level of a battery that supplies power to an in-vehicle device; determine whether or not to newly issue key information on the in-vehicle device based on the acquired remaining battery level, request, when it is determined that key information is to be newly issued, an external device for a certificate for newly issued key information through communication with the external device; and switch key information on the in-vehicle device to key information certified by the external device.

### BRIEF DESCRIPTION OF DRAWINGS

FIG. 1 is an explanatory diagram illustrating an overview of remote update;
FIG. 2 is a block diagram illustrating an example of a functional configuration of an update device according to an embodiment;
FIG. 3 is a flowchart illustrating an example of operations of the update device according to the embodiment;
FIG. 4 is a flowchart illustrating an example of a key/certificate update process;
FIG. 5 is a flowchart illustrating an example of a key/certificate issuance process; and
FIG. 6 is a flowchart illustrating an example of a key/certificate switch process.

### DESCRIPTION OF EMBODIMENTS

Hereinafter, an update device and a key update program according to an embodiment will be described with reference to the drawings. In embodiments, the same reference numerals are used for a configuration having the same functions, and repetitive description is omitted. The update device and the key update program which are described in the following embodiment are merely an example and are not intended to limit the embodiment. The following embodiments may be combined as appropriate to the extent not inconsistent therewith.

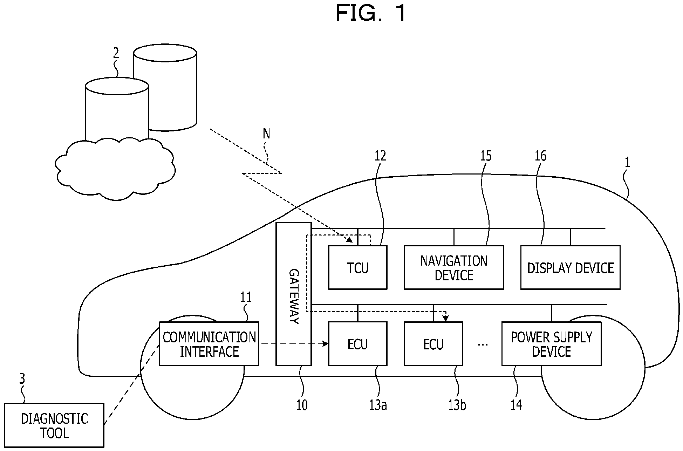

FIG. 1 is an explanatory diagram illustrating an overview of remote update. As illustrated in FIG. 1, a vehicle 1 has a variety of in-vehicle devices, and such in-vehicle devices are communicably coupled to each other through a vehicle bus such as a control area network (CAN), for example. The vehicle 1 may be a general automobile, a large automobile, a special work vehicle, or the like, and its intended use, type of vehicle, and the like are not limited.

For example, the vehicle 1 includes a gateway 10, a communication interface 11, a transmission control unit (TCU) 12, ECUs 13a, 13b, ..., a power supply device 14, a navigation device 15, and a display device 16. The ECUs 13a, 13b, ... may be referred to as the ECU 13 unless otherwise specified.

Such in-vehicle devices has software running thereon, and cooperative control is performed through communication via the CAN, for example, to realize various functions such as cruise control, advanced driver-assistance systems (ADAS) control, multimedia (audio-visual device) control, and body control (opening/closing and locking of doors and windows).

The software of each in-vehicle device is stored in a memory or the like of each in-vehicle device, and software update (also referred to as reprogramming) may be performed to improve functions. This reprogramming includes reprogramming by a diagnostic tool 3 coupled via a communication interface 11 according to a communication standard such as on-board diagnostics II (OBD-II), as well as remote over-the-air (OTA) reprogramming.

OTA reprogramming is software update performed by an OTA server 2 coupled via a communication network N such as a cellular line. In this OTA reprogramming, PKI key authentication is used to reduce the risk of unauthorized rewriting.

Key information such as a public key used for key authentication has an expiration date of, for example, about several years. The duration of use of the vehicle 1 is generally longer than the expiration date of the key information (for example, 10 years or more). Therefore, the key information on each in-vehicle device is updated by OTA (the expiration date is extended). The update device according to this embodiment performs such OTA update of the key information of the in-vehicle device, and the gateway 10, the TCU 12, and the ECU 13 in the vehicle 1 each correspond to the update device.

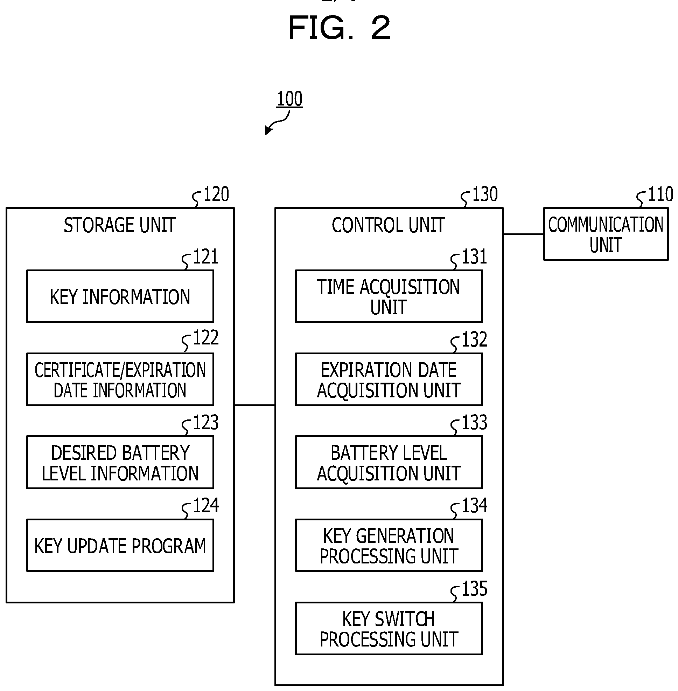

FIG. 2 is a block diagram illustrating an example of a functional configuration of the update device according to the embodiment. The update device 100 illustrated in FIG. 2 is an example of the gateway 10, the TCU 12, the ECUs 13a, 13b, and the like in the vehicle 1, and performs OTA update of key information on itself or another in-vehicle device. For example, the update device 100 may be the gateway 10 or the TCU 12 that updates key information on the ECUs 13a, 13b, ..., and the like, instead of the ECU 13. The update device 100 is each of the ECUs 13a, 13b, ... that communicate with the OTA server 2 through the communication network N from the gateway 10, and each of the ECUs 13a, 13b, ... may update its own key information.

As illustrated in FIG. 2, the update device 100 includes a communication unit 110, a storage unit 120, and a control unit 130.

The communication unit 110 is a processing unit that communicates with the in-vehicle devices in the vehicle 1 such as the gateway 10, the TCU 12, the ECU 13, the power supply device 14, the navigation device 15, the navigation device 15, and the display device 16 through the vehicle bus. The communication unit 110 communicates with an external device such as the OTA server 2 through the communication network N from the gateway 10.

The storage unit 120 stores various data such as key information 121, certificate/expiration date information 122, desired battery level information 123, and a key update program 124 to be executed by the control unit 130, for example. The storage unit 120 corresponds to a storage device such as a semiconductor memory device such as a random-access memory (RAM), a read-only memory (ROM), and a flash memory.

The key information 121 is key information on the in-vehicle device, and is data of a key pair of a secret key and a public key used for PKI key authentication in the in-vehicle device, for example. For example, the key information 121 indicates information on a secret key and a public key together with an identification name corresponding to its own in-vehicle device (an identification name of another in-vehicle device in the case of performing key authentication on behalf of the in-vehicle device).

The certificate/expiration date information 122 is information on the certificate (for example, a public key certificate) corresponding to the key information 121 and the expiration date of the certificate. For example, the certificate/expiration date information 122 indicates information on a certification authority (CA), the expiration date of the certificate, and the like, along with the identification name of the key information 121.

The desired battery level information 123 is information indicating the battery level (electric power amount) desired to update the key information 121 (for example, key/certificate issuance processing (S25)). For example, the certificate/expiration date information 122 indicates a value estimated as the amount of power desired to operate the gateway 10, the TCU 12, the ECU 13, and the like when updating the key information 121.

The key update program 124 is a program to be executed by the control unit 130. The control unit 130 performs various kinds of processing by reading and executing the key update program 124 stored in the storage unit 120. For example, the key update program 124 causes the control unit 130 to function as a time acquisition unit 131, an expiration date acquisition unit 132, a battery level acquisition unit 133, a key generation processing unit 134, and a key switch processing unit 135.

The control unit 130 is a processing unit that controls the overall processing of the update device 100. The control unit 130 is realized, for example, by a central processing unit (CPU), a microprocessor unit (MPU) or the like executing a program stored in an internal storage device using a RAM as a work area. The control unit 130 may also be realized by an integrated circuit such as an application-specific integrated circuit (ASIC) or a field-programmable gate array (FPGA).

For example, the control unit 130 includes the time acquisition unit 131, the expiration date acquisition unit 132, the battery level acquisition unit 133, the key generation processing unit 134, and the key switch processing unit 135. The time acquisition unit 131, the expiration date acquisition unit 132, the battery level acquisition unit 133, the key generation processing unit 134, and the key switch processing unit 135 are an example of an electronic circuit included in the processor and an example of a process executed by the processor.

The time acquisition unit 131 is a processing unit that acquires information about time. For example, the time acquisition unit 131 acquires the current time from a real-time clock (RTC). The time acquisition unit 131 also acquires a time stamp for certifying the existence of data at the current time by requesting a time stamp from a time-stamping authority (TSA) through the communication network N.

The expiration date acquisition unit 132 is a processing unit that acquires an expiration date of the key information 121. For example, the expiration date acquisition unit 132 reads the certificate/expiration date information 122 corresponding to the key information 121 from the identification name in the key information 121 to acquire the expiration date of the key information 121. When the certificate/expiration date information 122 corresponding to the key information 121 is not stored in the storage unit 120, the expiration date acquisition unit 132 transmits a send request indicating the identification name of the key information 121 to the OTA server 2 or the like through the communication network N, thereby acquiring the certificate/expiration date information 122 corresponding to the key information 121.

The battery level acquisition unit 133 is a processing unit that acquires the remaining battery level of a battery that supplies power to each in-vehicle device in the vehicle 1. For example, the battery level acquisition unit 133 acquires the remaining battery level of the battery from the power supply device 14 that manages the battery that supplies power to each in-vehicle device by communicating with the power supply device 14 through the communication unit 110.

The key generation processing unit 134 is a processing unit that performs processing related to generation of new key information 121. For example, the key generation processing unit 134 determines whether to newly issue key information 121 on the in-vehicle device based on the remaining battery level acquired by the battery level acquisition unit 133. Next, when it is determined that key information is to be newly issued, the key generation processing unit 134 requests the external device to certify the newly generated key information 121 by communicating with the external device such as the OTA server 2 through the communication network N.

The key switch processing unit 135 is a processing unit that performs processing of switching the key information 121 on the in-vehicle device from old key information (old key pair) to new key information (new key pair) certified by the external device through the key generation processing unit 134. For example, the key switch processing unit 135 stops creation of an electronic signature using the secret key of the old key pair and authentication using the public key of the old key pair. Then, the key switch processing unit 135 starts creation of an electronic signature using the secret key of the new key pair and authentication using the public key of the new key pair.

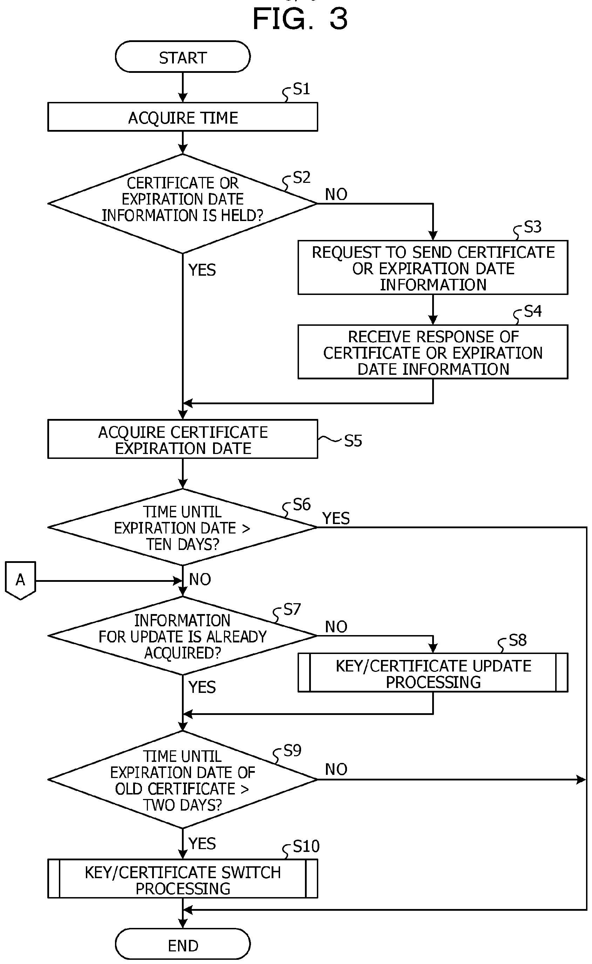

FIG. 3 is a flowchart illustrating an example of operations of the update device 100 according to the embodiment. The operations of the update device 100 illustrated in FIG. 3 are started, for example, in response to ignition-on of the vehicle 1. The operations of the update device 100 may also be started at a regular time, separately from the ignition-on.

As illustrated in FIG. 3, when the processing is started, the time acquisition unit 131 acquires the current time (S1). Next, the expiration date acquisition unit 132 searches through the storage unit 120 for the certificate/expiration date information 122 corresponding to the key information 121 to determine whether or not the certificate of the key information 121 or the expiration date information is held. (S2).

When the certificate or the expiration date information is held (S2: Yes), the expiration date acquisition unit 132 proceeds directly to S5 since the certificate or the expiration date information is held. When the certificate or the expiration date information is not held (S2: No), the expiration date acquisition unit 132 transmits a send request indicating the identification name of the key information 121 to the OTA server 2 or the like through the communication network N (S3). Next, the expiration date acquisition unit 132 receives a response to the send request, for example, acquires the certificate/expiration date information 122 corresponding to the key information 121 (S4).

Then, the expiration date acquisition unit 132 acquires the expiration date of the certificate corresponding to the key information 121 from the certificate/expiration date information 122 already held or the certificate/expiration date information 122 acquired by receiving the response. (S5).

Thereafter, the key generation processing unit 134 determines whether or not the remaining period from the current time acquired by the time acquisition unit 131 to the certificate expiration date is longer than ten days (S6). The number of days to be the criterion for determination in S6 is not limited to ten days, and may be any predetermined period.

When the remaining period of the certificate until the expiration date is longer than ten days (S6: Yes), the key generation processing unit 134 immediately terminates the processing.

When the remaining period until the certificate expiration date is not longer than ten days and shorter (S6: No), the key generation processing unit 134 determines whether or not information for updating the keys, for example, new key information (new key pair) certified by the external device is already acquired (S7). When the new key information is already acquired (S7: Yes), the key generation processing unit 134 advances the processing to S9.

When the new key information is not yet acquired (S7: No), the key generation processing unit 134 performs key/certificate update processing (S8) and advances the processing to S9.

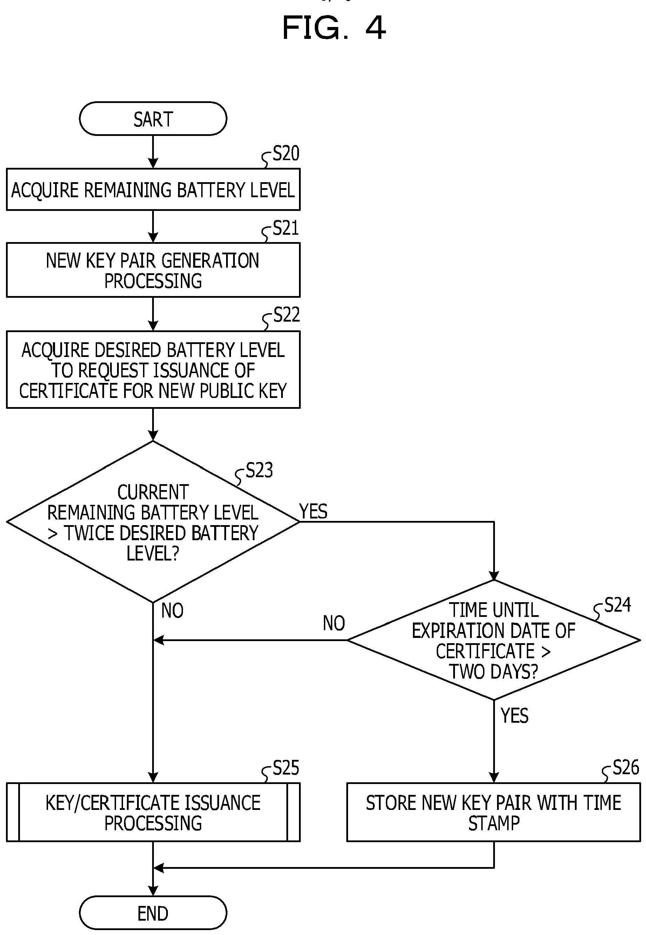

FIG. 4 is a flowchart illustrating an example of a key/certificate update process. As illustrated in FIG. 4, as the processing is started, the battery level acquisition unit 133 acquires the remaining battery level from the power supply device 14 that manages the battery that supplies power to each in-vehicle device (S20).

Next, the key generation processing unit 134 performs generation processing to generate a new key pair (a secret key and a public key) (S21). Then, the key generation processing unit 134 refers to the desired battery level information 123 to acquire the battery level desired to issue a certificate to a new public key in a new key pair, for example, the battery level desired to perform key/certificate issuance processing (S25) (S22).

Thereafter, the key generation processing unit 134 determines whether or not the current remaining battery level acquired in S20 is more than twice the desired battery level (S23). The multiple of the desired battery level to be the criterion for determination in S23 is not limited to twice, and may be any predetermined value.

When the current remaining battery level is more than twice the desired battery level (S23: Yes), the key generation processing unit 134 determines whether or not the remaining period until the expiration date of the certificate is longer than two days (S24). The number of days to be the criterion for determination in S24 is not limited to two days, and may be any predetermined period.

When the current remaining battery level is more than twice the desired battery level (S23: Yes) and the remaining period until the certificate expiration date is longer than two days (S24: Yes), the key/certificate issuance processing (S25) does not have to be performed at this time since the battery level is sufficient and there is sufficient time left until the expiration date of the certificate.

Therefore, when the remaining period until the certificate expiration date is longer than two days (S24: Yes), the key generation processing unit 134 acquires a time stamp for the new key pair from the time acquisition unit 131. Next, the key generation processing unit 134 stores the new key pair as key information 121 with a time stamp in the storage unit 120 separately from the key information 121 in operation (S26), and then terminates the processing.

Thus, when the key/certificate issuance processing (S25) is performed later, the key/certificate issuance processing may be performed for a new key pair at the time of generation by reading the key information 121 whose generation time is certified by the time stamp. For example, even if the expiration date of the certificate in the key information 121 in operation has expired before the key/certificate issuance process is performed, the generation time of the new key pair may be verified by the time stamp. Therefore, it may be proved that the key pair is a new key pair generated within the expiration date of the certificate, and the key/certificate issuance processing may be performed.

When the remaining period until the expiration date of the certificate is not longer than two days (S24: No) or the current remaining battery level is not more than twice the desired battery level (S23: No), the key/certificate issuance processing (S25) is performed at this time. In this case, the key generation processing unit 134 performs the key/certificate issuance processing (S25) before terminating the processing.

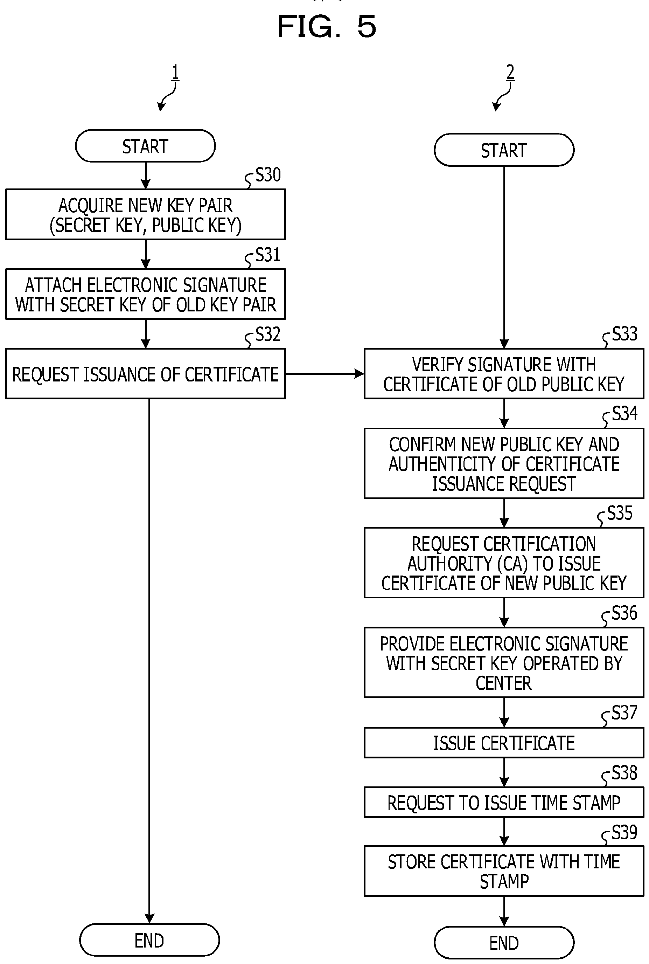

FIG. 5 is a flowchart illustrating an example of a key/certificate issuance process. The flowchart on the left side in FIG. 5 illustrates processing performed by the vehicle 1 side. The flowchart on the right side in FIG. 5 illustrates processing performed by the OTA server 2 side.

As illustrated in FIG. 5, as the processing is started, the key generation processing unit 134 acquires a new key pair (a secret key and a public key) (S30). When the key information 121 with the time stamp is stored in the storage unit 120 in S30, the key information 121 with the time stamp is set as a new key pair. When the key information 121 with the time stamp is not stored in the storage unit 120, the key pair generated in S21 is set as a new key pair.

Next, the key generation processing unit 134 attaches an electronic signature to the description of the new public key and the grounds for requesting the current processing (including, for example, total battery level information) using the secret key of the old key pair in operation (S31). For example, the key generation processing unit 134 attaches a signature to the newly generated key information based on the key information on the in-vehicle device in operation.

Then, the key generation processing unit 134 sends the electronic signature, the new public key, and the description attached in S31 from the communication unit 110 to the OTA server 2 through the communication network N, and requests for the issuance of a certificate (S32).

The OTA server 2 requested to issue the certificate verifies the electronic signature with the certificate of the old public key (S33), and confirms the new public key and the authenticity of the request (S34).

Next, when the authenticity of the request may be confirmed, the OTA server 2 requests the certification authority (CA) to issue a certificate of the new public key (S35). In this event, the OTA server 2 provides an electronic signature with a secret key operated by the OTA server 2 side (center) (S36).

The CA authenticates the OTA server 2 using the certificate (public key) of the OTA server 2 and issues the requested certificate (S37). The OTA server 2 receives the certificate from the CA, compiles the certificates including the one received to send back to the vehicle 1 side after attaching an electronic signature with a secret key operated by the OTA server 2. Upon receipt of the response with the certificate, the key generation processing unit 134 stores the new key information 121 and the certificate/expiration date information 122 in the storage unit 120 separately from the key information 121 and the certificate/expiration date information 122 in operation.

The OTA server 2 requests the time-stamping authority (TSA) to issue a time stamp to certify the time of completion of the operation (S38). Upon receipt of the time stamp issuance request, the TSA issues a time stamp to the OTA server 2. The OTA server 2 receives the time stamp from the TSA, and stores the key information for which a certificate is issued with the time stamp (S39).

Referring back to FIG. 3, after S7 and S8, the key switch processing unit 135 determines whether or not the remaining period until the expiration date of the certificate (old certificate) corresponding to the key information 121 in operation is longer than two days (S9). The number of days to be the criterion for determination in S9 is not limited to two days, and may be any predetermined period.

When the remaining period until the expiration date of the old certificate is not longer than two days (S9: No), the key switch processing unit 135 immediately terminates the processing. On the other hand, when the remaining period until the expiration date of the old certificate is longer than two days (S9: Yes), the key switch processing unit 135 performs key/certificate switch processing (S10).

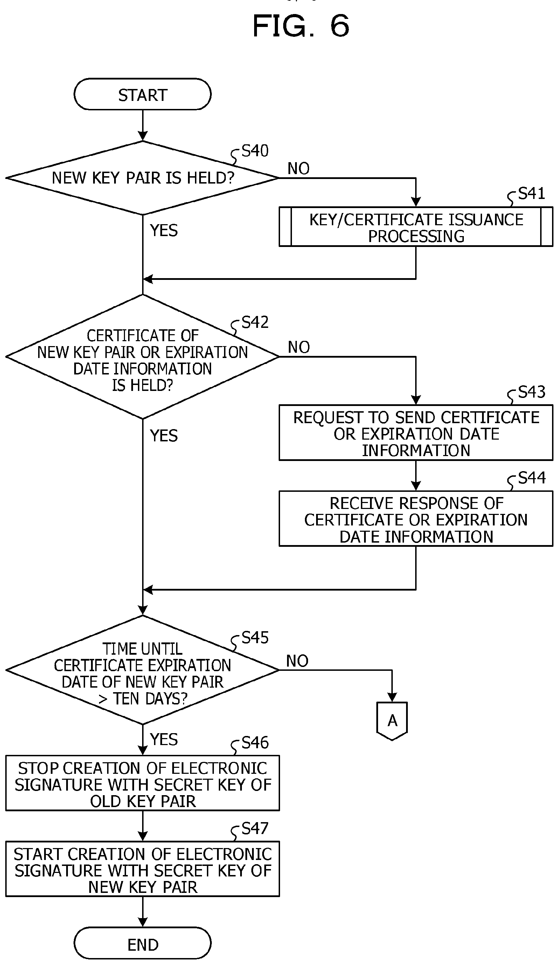

FIG. 6 is a flowchart illustrating an example of a key/certificate switch process. As illustrated in FIG. 6, as the processing is started, the key switch processing unit 135 determines whether or not the key information 121 of the new key pair with the certificate is stored in the storage unit 120 separately from the key information 121 in operation it has been performed (S40).

When a new key pair is held (S40: Yes), the key switch processing unit 135 advances the processing directly to S42. When no new key pair is held (S40: No), the key generation processing unit 134 performs the same key/certificate issuance processing as in S25 (S41).

In S41, the key switch processing unit 135 searches for the certificate/expiration date information 122 corresponding to the key information 121 of the new key pair, and determines whether or not a certificate of the new key pair is held or the expiration date information is held (S42).

When the certificate of the new key pair or the expiration date information is held (S42: Yes), the key switch processing unit 135 advances the processing directly to S45 since the certificate of the new key pair or the expiration date information is held. When the certificate of the new key pair or the expiration date information is not held (S42: No), the key switch processing unit 135 transmits a send request indicating the identification name of the new key pair to the OTA server 2 or the like through the communication network N (S43). Next, the key switch processing unit 135 receives a response to the send request, for example, acquires the certificate/expiration date information 122 corresponding to the new key pair (S44).

Then, the key switch processing unit 135 determines whether or not the remaining period from the current time acquired by the time acquisition unit 131 to the expiration date in the certificate of the new key pair is longer than ten days (S45). The number of days to be the criterion for determination in S45 is not limited to ten days, and may be any predetermined period.

When the remaining period until the expiration date of the certificate of the new key pair is longer than ten days (S45: Yes), the key switch processing unit 135 stops creation of an electronic signature using the secret key of the old key pair and authentication using the public key of the old key pair (S46). Next, the key switch processing unit 135 starts creation of an electronic signature using the secret key of the new key pair and authentication using the public key of the new key pair (S47) before terminating the processing. When the remaining period until the expiration date of the certificate of the new key pair is not longer than ten days (S45: No), the key switch processing unit 135 returns the processing to S7.

As described above, the update device 100 includes the battery level acquisition unit 133, the key generation processing unit 134, and the key switch processing unit 135. The battery level acquisition unit 133 acquires the remaining level of the battery that supplies power to the in-vehicle devices such as the ECUs 13a, 13b, ..., and the like. The key generation processing unit 134 determines whether to newly issue key information to be used by the in-vehicle device based on the acquired remaining battery level. When determining that key information is to be newly issued, the key generation processing unit 134 requests the external device to certify the newly generated key information through communication with the external device such as the OTA server 2. The key switch processing unit 135 switches the key information on the in-vehicle device to the key information certified by the external device.

This makes it possible to suppress the key information update processing from being performed at an inappropriate timing such as when there is not enough battery level to update the key information for each in-vehicle device in the vehicle 1, and to update the key information at an appropriate timing.

The update device 100 includes the time acquisition unit 131 that acquires the current time and the expiration date acquisition unit 132 that acquires the expiration date of the certificate for the key information. When the remaining period from the acquired current time to the expiration date of the key information on the in-vehicle device satisfies a predetermined condition, the key switch processing unit 135 switches to the key information certified by the external device.

This makes it possible to realize operation such that the key pair is not switched to a new key pair when there is enough remaining period of the old key pair, and to extend the utilization period of the key pair to near the expiration date.

When determining that new issuance is not to be performed based on the acquired remaining battery level, the key generation processing unit 134 stores the newly generated key information after attaching a time stamp thereto. This makes it possible to verify the generation time of the newly generated key information with the time stamp. Even if the key information in operation expires before the newly generated key information is certified, it is possible to verify with the time stamp that the key information is generated within the expiration date.

The key generation processing unit 134 requests certification of the newly generated key information by attaching a signature based on the key information on the in-vehicle device to the newly generated key information. Thus, the external device that has received the certification request may confirm the authenticity of the request source by using the signature based on the key information on the in-vehicle device.

The components of parts illustrated in the drawings are not necessarily configured physically as illustrated in the drawings. For example, specific forms of dispersion and integration of the parts are not limited to those illustrated in the drawings, and all or part thereof may be configured by being functionally or physically dispersed or integrated in given units according to various loads, the state of use, and the like. For example, the time acquisition unit 131, the expiration date acquisition unit 132, and the battery level acquisition unit 133 may be integrated. The key generation processing unit 134 and the key switch processing unit 135 may be integrated. The order of processing illustrated in the drawings is not limited to the order described above, and the processing may be simultaneously performed or the order may be switched within the range in which the processing contents do not contradict one another.

All or any of the various processing functions performed in the devices may be performed on a central processing unit (CPU) (or a microcomputer, such as an MPU or a microcontroller unit (MCU)). It is to be understood that all or any part of the various processing functions may be executed on programs analyzed and executed by a CPU (or a microcomputer such as an MPU or an MCU) or on hardware using wired logic.

The key update program 124 may not be stored in the storage unit 120. For example, the update device 100 may read and execute the key update program 124 stored in a storage medium readable by the update device 100. The storage medium readable by the update device 100 is, for example, a portable recording medium such as a CD-ROM, a digital versatile disc (DVD), a Universal Serial Bus (USB) memory, a semiconductor memory such as a flash memory, a hard disk drive, and the like. The key update program 124 may be stored in a device coupled to a public line, the Internet, a LAN, or the like, and the update device 100 may read and execute the key update program 124 from these devices.

### List of signs in the Drawings

- 1...: vehicle
- 2...: OTA server
- 3...: diagnostic tool
- 10...: gateway
- 11...: communication interface
- 12...: TCU
- 13, 13a, 13b...: ECU
- 14...: power supply device
- 15...: navigation device
- 16...: display device
- 100...: update device
- 110...: communication unit
- 120...: storage unit
- 121...: key information
- 122...: certificate/expiration date information
- 123...: desired battery level information
- 124...: key update program
- 130...: control unit
- 131...: time acquisition unit
- 132...: expiration date acquisition unit
- 133...: battery level acquisition unit
- 134...: key generation processing unit
- 135...: key switch processing unit
- N...: communication network

## Claims

1. A key update device comprising:
a remaining battery level acquiring unit that acquires a remaining battery level of a battery that supplies power to an in-vehicle device;
a key generation unit that determines whether or not to newly issue key information on the in-vehicle device based on the acquired remaining battery level, and requesting, when it is determined that key information is to be newly issued, an external device for a certificate for newly issued key information through communication with the external device; and
a key switch unit that switches key information on the in-vehicle device to key information certified by the external device.

2. The key update device according to claim 1, further comprising:
a current time acquiring unit that acquires a current time;
an expiration date acquiring unit that acquires an expiration date of a certificate for the key information, and
wherein the key switch unit switches to the key information certified by the external device when the remaining period from the acquired current time to the expiration date of the key information on the in-vehicle device satisfies a predetermined condition.

3. The key update device according to claim 1, further comprising:
the key generation unit stores the newly issued key information after attaching a time stamp thereto when it is determined, based on the acquired remaining battery level, that key information is not to be newly issued.

4. The key update device according to claim 1, further comprising:
the key generation unit requests a certificate for the newly issued key information by attaching a signature based on the newly issued key information.

5. A computer-readable storage medium storing therein a key update program that causes a computer to execute a key update process, the process comprising:
acquiring a remaining battery level of a battery that supplies power to an in-vehicle device;
determining whether or not to newly issue key information on the in-vehicle device based on the acquired remaining battery level,
requesting, when it is determined that key information is to be newly issued, an external device for a certificate for newly issued key information through communication with the external device; and
switching key information on the in-vehicle device to key information certified by the external device.

6. The storage medium according to claim 5, the process further comprising:
acquiring a current time; and
acquiring an expiration date of a certificate for the key information, wherein
the switching includes switching to the key information certified by the external device when the remaining period from the acquired current time to the expiration date of the key information on the in-vehicle device satisfies a predetermined condition.

7. The storage medium according to claim 5, wherein the requesting includes storing the newly issued key information after attaching a time stamp thereto when it is determined, based on the acquired remaining battery level, that key information is not to be newly issued.

8. The storage medium according to claim 5, wherein the requesting includes requesting a certificate for the newly issued key information by attaching a signature based on the newly issued key information.
